# EUROPEAN PATENT APPLICATION

(11) **EP 4 358 004 A1**
(43) Date of publication of application: **24.04.2024**
(21) Application number: 22824993.4
(22) Date of filing: 14.06.2022
(51) Int. Cl.: G06Q 30/02

(54) **QUOTATION ESTIMATION DEVICE, QUOTATION ESTIMATION METHOD, AND QUOTATION ESTIMATION PROGRAM**

(30) Priority: 15.06.2021 JP 2021099649
(71) Applicant: Kabushiki Kaisha Toshiba, Minato-ku Tokyo 105-8001 (JP); Toshiba Digital Solutions Corporation, Kawasaki-shi, Kanagawa 212-8585 (JP)
(72) Inventor: PON, Fei, Kawasaki-shi, Kanagawa 212-8585 (JP); ASANO, Yutaka, Kawasaki-shi, Kanagawa 212-8585 (JP); SETOGUCHI, Tatsuya, Kawasaki-shi, Kanagawa 212-8585 (JP); YAMADA, Toshiki, Kawasaki-shi, Kanagawa 212-8585 (JP)
(74) Representative: Hoffmann Eitle
(86) International application number: PCT/JP2022/023782
(87) International publication number: WO 2022/265005

(57) **Abstract**

An estimate presumption apparatus of an embodiment includes: a presumption model generation unit configured to generate a presumption model using a neural network, with data directly related to calculation of estimated unit prices of estimate replies, data not directly related to the calculation of the estimated unit prices of the estimate replies, and the estimated unit prices of the estimate replies as learning data; and a presumption unit configured to presume a unit price of a product/part using the presumption model generated by the presumption model generation unit.

## Description

### Technical Field

Embodiments of the present invention relate to an estimate presumption apparatus, an estimate presumption method, and an estimate presumption program.

### Background Art

Supply chain management (SCM) systems are widely used. A supply chain is a term for a flow of procurement of parts, for example, that is considered as a single supply chain. In a supply chain, a relationship between a consumer (i.e., a buyer) and a seller (i.e., a supplier) is defined. An SCM system manages supply of products, such as parts, in a supply chain.

When a buyer requests an estimate of parts and the like from a supplier using an SCM system, the supplier sends an estimate reply to the buyer using the SCM system.

However, when the buyer acquires a large quantity of estimates from the supplier at the same time, there is a possibility that the buyer cannot perfectly perform close examination of all the estimates and overlooks an abnormal estimate.

An object of an embodiment is to provide an estimate presumption apparatus making it possible to easily grasp an abnormal estimate, an estimate presumption method, and an estimate presumption program.

### Disclosure of Invention

### Means for Solving the Problem

An estimate presumption apparatus of the embodiment includes: a presumption model generation unit configured to generate a presumption model using a neural network, with data directly related to calculation of estimated unit prices of estimate replies, data not directly related to the calculation of the estimated unit prices of the estimate replies, and the estimated unit prices of the estimate replies as learning data; and a presumption unit configured to presume a unit price of a product/part using the presumption model generated by the presumption model generation unit.

### Brief Description of the Drawings

Fig. 1 is a configuration diagram illustrating an example of a configuration of a supply chain management system of one embodiment;
Fig. 2 is a schematic diagram for illustrating a supply chain;
Fig. 3 is a block diagram illustrating a configuration of a program and data executed in a server;
Fig. 4 is a diagram illustrating an example of an estimate reply sent from a supplier to a buyer;
Fig. 5 is a diagram illustrating an example of input items inputted to a neural network from estimate breakdown items of the estimate reply;
Fig. 6 is a diagram for illustrating an example of a flow of a presumption model generation process and a similar product search process;
Fig. 7 is a diagram illustrating a configuration example of the neural network;
Fig. 8 is a flowchart illustrating an example of a flow of the presumption model generation process;
Fig. 9 is a flowchart illustrating an example of a flow of an estimated unit price presumption process;
Fig. 10 is a diagram illustrating an example of an analysis report showing relationships between estimated unit prices and presumed unit prices;
Fig. 11 is a diagram illustrating an example of importance degrees of the estimate breakdown items;
Fig. 12 is a diagram illustrating an example of a similar product search screen at the time of searching for similar products using the importance degrees;
Fig. 13 is a flowchart illustrating an example of a flow of the similar product search process using the importance degrees; and
Fig. 14 is a diagram illustrating an example of a standard unit price table.

### Best Mode for Carrying Out the Invention

An embodiment will be described in detail below with reference to drawings.

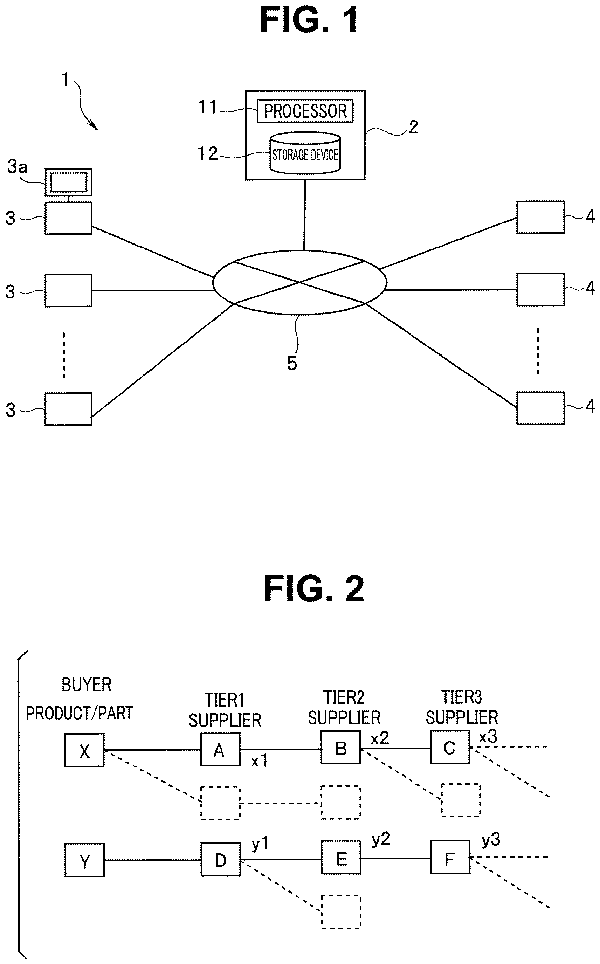

Fig. 1 is a configuration diagram illustrating an example of a configuration of a supply chain management system of one embodiment. A supply chain management system 1 includes a server 2 as an estimate management device, a plurality of terminals 3 for a plurality of buyers, a plurality of terminals 4 for a plurality of suppliers, and a communication network 5.

The server 2 and the plurality of terminals 3 and 4 are connected to each other in a communicable manner via the network 5. The network 5 herein is the Internet. Each of the terminals 3 and 4 includes an input device and a display device 3a. The input device is a keyboard or a mouse, for example, and the display device 3a is a monitor. Note that Fig. 1 illustrates the display device 3a of only one terminal 3.

The server 2 includes a processor 11 and a storage device 12. The storage device 12 stores various software programs for the supply chain management system described below, and also stores various types of information.

By the processor 11 reading and executing a necessary program such as an estimate presumption program from the storage device 12, various kinds of functions of the supply chain management system and functions for assessment of an estimate and display of a result of the estimate described later are realized.

The supply chain management system 1 is a system for managing a supply chain for each of products, such as parts, purchased by a plurality of buyers or supplied by a plurality of suppliers. As described below, the server 2 can transmit supply chain risk information to the terminals 3 and 4 via the network 5 in response to a request from the terminals 3 and 4 received via the network 5.

Each buyer is able to manage his/her supply chain using the supply chain management system 1. Therefore, each buyer is able to register his/her supply chain information by accessing the server 2 from his/her terminal 3. Each buyer may register all of his/her supply chain information, and each supplier may register his/her supply chain information, and further, a tier 1 supplier may register supplier information on tier 2 and following suppliers.

Each buyer is able to register information on each supplier (i.e., counterparty basic information (including counterparty risk information RI)) by accessing the server 2 from his/her terminal 3.

Each buyer and each supplier are able to input, display, and output data on a screen using a browser by accessing the server 2 via the network 5 using his/her terminals 3 and 4. Note that the server 2 may be accessed from each of the terminals 3 and 4 through various authentication processes.

Fig. 2 is a schematic diagram for illustrating a supply chain. Fig. 2 illustrates an example of a supply chain for parts X and Y. Fig. 2 illustrates a case where a buyer has purchased the parts X from a supplier A, and has also purchased the parts Y from a supplier D to produce and sell the own products of the buyer. In such a case, the suppliers A and D are tier 1 suppliers of the parts X and Y, respectively.

However, the suppliers A and D have respectively purchased parts x1 and y1 from suppliers B and E to produce and sell the parts X and Y. Further, the suppliers B and E have respectively purchased parts x2 and y2 from suppliers C and F to produce and sell the parts x1 and y1. Furthermore, the suppliers C and F have respectively purchased parts x3 and y3 from other suppliers to produce and sell the parts x2 and y2. In other words, the supply chain includes a plurality of tiers. Accordingly, each supplier may also be a buyer.

Note that the supply chain may branch into a plurality of suppliers as indicated by dotted lines in Fig. 2. For example, the buyer may receive supply of parts from two suppliers regarding the parts X, and the supplier D may also receive supply of parts from two suppliers.

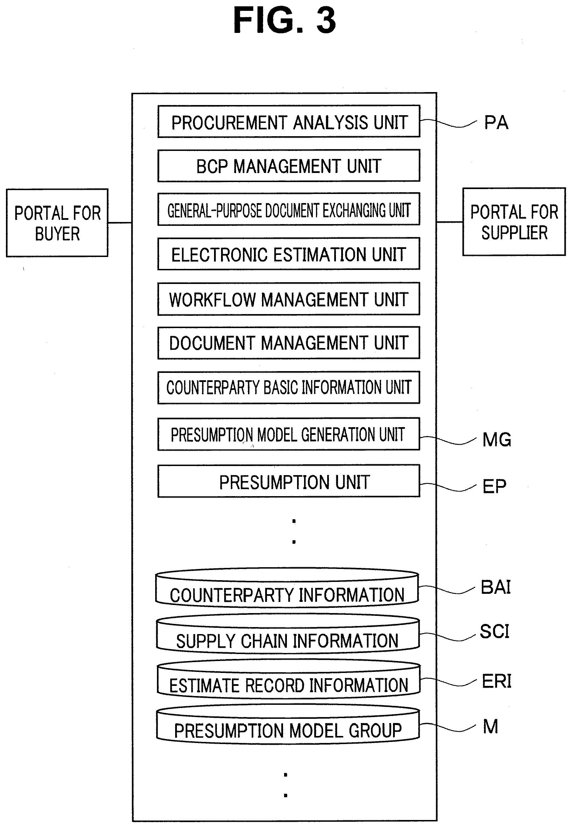

Fig. 3 is a block diagram illustrating configurations of programs and data executed in the server 2. The server 2 includes a software program for managing an operation between a buyer and a supplier based on SRM (supplier relationship management). In the supply chain management system 1, the software program for SRM is stored in the storage device 12.

Fig. 3 illustrates, for SRM of supply chain management, a procurement analysis unit PA, a BCP (business continuity planning) management unit, a general-purpose document exchanging unit, an electronic estimation unit, a workflow management unit, a document management unit, a counterparty basic information unit, a presumption model generation unit MG, and a presumption unit EP, but also includes various other processing units. Further, portal programs for managing access to the supply chain management system 1 are also included. In Fig. 3, a portal for a buyer is a processing unit for the buyer to access the server 2, and performs various authentication processes. When adequate authentication is successful, the buyer is allowed to use the server 2. A portal for a supplier is a processing unit for the supplier to access the server 2, and performs various authentication processes. When adequate authentication is successful, the supplier is allowed to use the server 2.

The procurement analysis unit PA, the BCP management unit, and the like are stored as software programs in the storage device 12, and can be read when necessary to be executed by the processor 11.

The procurement analysis unit PA analyzes procurement of products/parts from suppliers for each buyer. The procurement analysis unit PA can generate an analysis report, such as the number of estimates, results of estimates, and various evaluations, for each supplier related to each buyer based on estimate record information ERI, for example.

The BCP management unit collects latitude/longitude information on a site of each supplier forming a supply chain, and, in case of an emergency, such as a disaster, identifies a site existing in the disaster-affected range, for example.

The general-purpose document exchanging unit exchanges a document between a buyer and a supplier.

The electronic estimation unit manages a request for an estimate transmitted to a supplier and a reply from the supplier with regard to the estimate. A buyer is able to request one or more suppliers to estimate products/parts using the electronic estimation unit. The request for the estimate is transmitted to the one or more suppliers, and then, the one or more suppliers may transmit estimate replies to the buyer.

The workflow management unit manages workflows of various processes between a buyer and a supplier.

The document management unit manages a document created by a buyer, and a document received from a supplier, for example.

The counterparty basic information unit registers and manages basic information (e.g., a capital, a president, and counterparty risk information RI) on a tier 1 supplier, for example, as counterparty information BAI in the storage device 12. When a buyer is unable to register information on all of suppliers, it is possible to allow a tier 1 supplier to register basic information on tier 2 and following suppliers.

The counterparty risk information RI included in the counterparty information includes a quantified risk level r regarding a countermeasure for a disaster taken by a supplier, for example. The risk level r is a value obtained by performing quantification based on a predetermined evaluation criterion. For example, the risk level r has four levels. The level 1 of the risk level r is the lowest, which means that a sufficient countermeasure for a disaster is taken, and there is a sufficient stock of products, for example. The level 4 of the risk level r is the highest, which means that a sufficient countermeasure for a disaster is not taken, for example. For example, a buyer conducts an interview with each supplier to determine the level based on the predetermined evaluation criterion. A risk level r of each of the tier 2 and following suppliers is determined by the tier 1 supplier, for example.

The presumption model generation unit MG reads estimate replies such as the estimate record information ERI and the like, performs learning by deep learning, and generates a presumption model. The presumption model generation unit MG performs learning by deep learning for each of products/parts or processing types, for example, resin molding processing, cutting processing, and assembly processing to generate a presumption model. The presumption model generation unit MG stores a plurality of presumption models that have been generated into the storage device 12 as a presumption model group M.

When a supplier sends a new estimate reply based on an estimate request from a buyer, the presumption unit EP inputs the estimate reply to a presumption model for a corresponding product/part in the presumption model group M to presume a unit price of the product/part. The presumption unit EP can calculate a difference between an estimated unit price written in the estimate reply and the presumed unit price presumed by AI, and display a calculation result on the display device 3a.

The storage device 12 of the server 2 also stores various types of information other than the software programs. Fig. 3 illustrates only the counterparty information BAI, supply chain information SCI, the estimate record information ERI, and the presumption model group M.

The counterparty information BAI is basic information (e.g., a capital, a president, and counterparty risk information RI on the tier 1 supplier, for example, as described above.

The supply chain information SCI is site information on the tier 1 supplier, the tier 2 supplier, and the tier 3 supplier, for example, for each deliverable (e.g., part or product) in a supply chain. The site information on the tier 1 supplier, the tier 2 supplier, and the tier 3 supplier, for example, is registered. Each site information includes a site name and positional information. Each site is a place where a factory, such as a subcontractor, is present. The positional information includes latitude/longitude information. The site information on the tier 2 supplier and the tier 3 supplier, for example, is registered by the tier 1 supplier.

The estimate record information ERI is information about estimate requests, estimate replies, estimate results, and the like. The presumption model group M includes information about the plurality of presumption models generated by the presumption model generation unit MG.

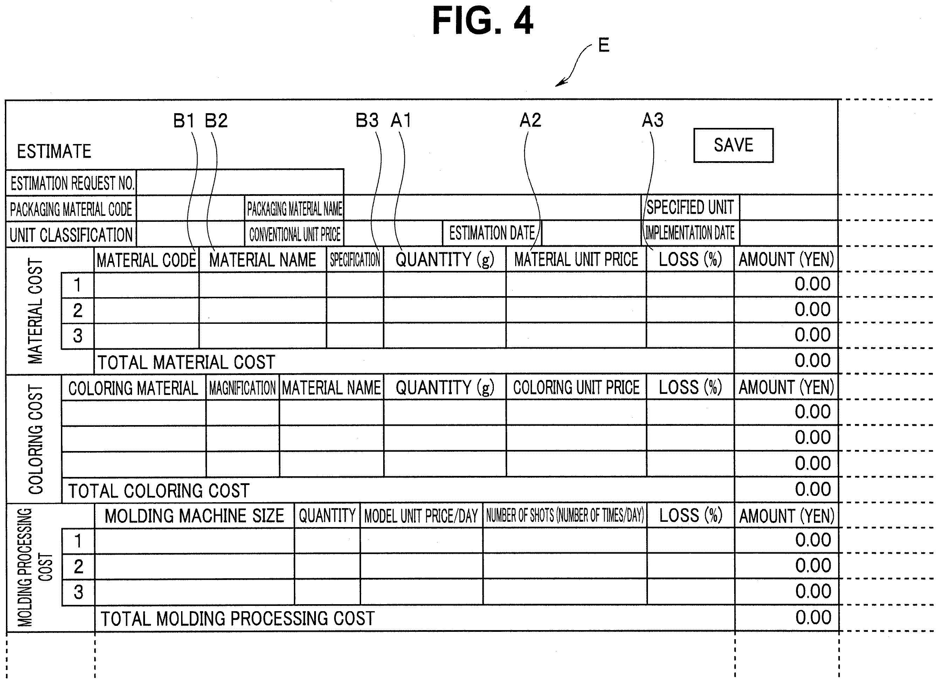

Fig. 4 is a diagram illustrating an example of an estimate reply sent from a supplier to a buyer.

When a buyer requests an estimate from a supplier via the electronic estimation unit, the supplier fills in an estimate reply E of Fig. 4 and sends the estimate reply E to the buyer via the electronic estimation unit. The buyer closely examines the estimate reply E to confirm whether there is no abnormality in an estimated unit price (an estimated amount) of a product/part.

The estimate reply E is an estimate about a molded article and includes entry fields for material cost, coloring cost, molding processing cost, and the like. Note that the estimate reply E includes not only the entry fields for material cost, coloring cost, and molding processing cost but also entry fields for material information including items such as material manufacturer, unit price details including items such as management fee profit, and the like, which are not illustrated.

The items of material cost include material code, material name, specifications, quantity (g), material unit price, and loss (%). The items of coloring cost include coloring material, magnification, material name, quantity (g), coloring unit price, and loss (%). The items of molding processing cost include molding machine size, quantity, model unit price/day, number of shots (number of times/day), and loss (%).

Among the items of material cost, items directly related to calculation of the estimated unit price, for which numerical data is inputted, are quantity (g) of an item A1, material unit price of an item A2, and loss (%) of an item A3. On the other hand, among the items of material cost, items not directly related to calculation of the estimated unit price, for which numerical data is not inputted, are material code of an item B 1, material name of an item B2, and specifications of an item B3.

Among the items of coloring cost, items directly related to calculation of the estimated unit price are the quantity (g), coloring unit price, and loss (%), and items not directly related to calculation of the estimated unit price are coloring material, magnification, and material name. Among the items of molding processing cost, items directly related to calculation of the estimated unit price are molding machine size, quantity, model unit price/day, number of shots (number of times/day), and loss (%), and there is no items that are not directly related to calculation of the estimated unit price.

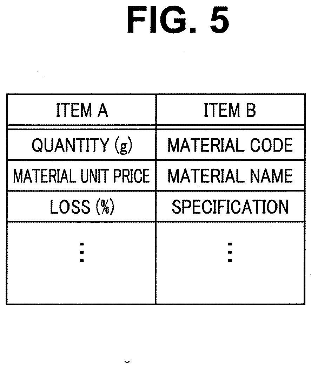

Fig. 5 is a diagram illustrating an example of input items inputted to a neural network from estimate breakdown items of an estimate reply.

In Fig. 5, items A are names of items for which numerical data is inputted, such as the items A1, A2, A3, and the like of the estimate reply E, and items B are names of items for which non-numerical data (pull-down data) is inputted, such as the items B1, B2, B3, and the like of the estimate reply E. In other words, the items A are names of items for which numerical data such as "quantity (g)", "material unit price", and "loss (%)" that are directly related to calculation of the estimated unit price is inputted, and the items B are names of items for which non-numerical data such as "material code", "material name", and "specifications that are not directly related to calculation of the estimated unit price is inputted. The item names of the items A and numerical data corresponding to the item names, and the item names of the items B and non-numerical data corresponding to the item names are given to an input layer of a neural network NN described later.

Generally, in the case of generating a presumption model from the estimate replies E of Fig. 4, data directly related to calculation of estimated unit prices (the item names of the items A and input data (numerical data) corresponding to the item names) is given to the input layer of the neural network NN, and the estimated unit prices written in the estimate replies are given to an output layer. Note that, since the item names of the items A are non-numerical data, preprocessing is performed to digitize the item names.

In comparison, in the present embodiment, a presumption model is generated using data not directly related to calculation of the estimated unit prices (the item names of the items B and input data corresponding to the item names (non-numerical data)) in addition to the data directly related to calculation of the estimated unit prices (the item names of the items A and the input data corresponding to the item names (numerical data)). More specifically, by giving the item names of the items A directly related to calculation of the estimated unit prices and the input data corresponding to the item names (a first dataset) and the item names of the items B not directly related to calculation of the estimated unit prices and the input data corresponding to the item names (a second dataset) to the input layer of the neural network NN and giving the estimated unit prices to the output layer, a presumption model is generated. Note that, since the item names of the items A, the item names of the items B, and the input data corresponding to the item names of the items B are non-numerical data, preprocessing is performed to digitize the item names and the input data.

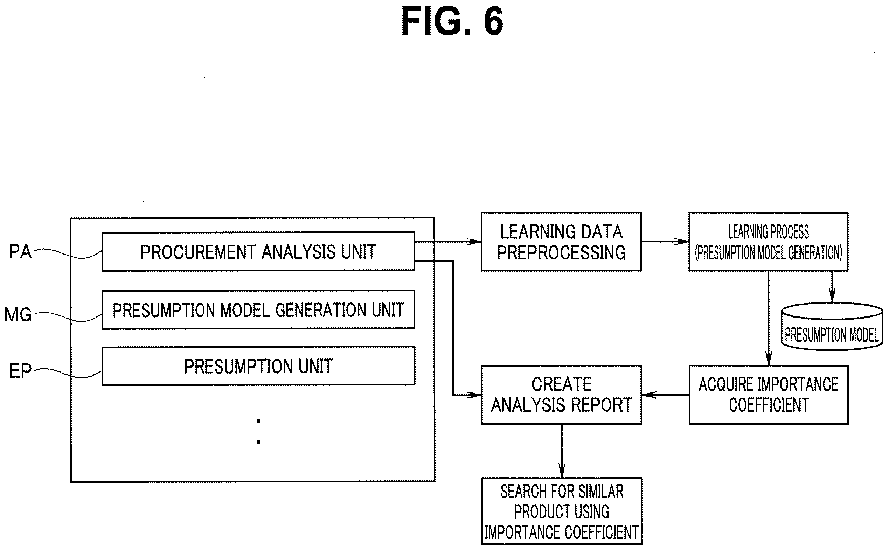

Fig. 6 is a diagram for illustrating an example of a flow of a presumption model generation process and a similar product search process.

The procurement analysis unit PA reads the estimate record information ERI and performs preprocessing of learning data. More specifically, the procurement analysis unit PA extracts the item names of the items A directly related to calculation of the estimated unit prices and the numerical data corresponding to the item names and extracts the item names of the items B not directly related to calculation of the estimated unit prices and the non-numerical data corresponding to the item names. Then, the procurement analysis unit PA performs preprocessing for digitizing the item names of the items A, the item names of the items B, and the input data corresponding to the item names of the items B, which are non-numerical data. By giving the data corresponding to the item names of the items A, which is numerical data, the item names of the items A, the item names of the items B, and the data corresponding to the item names of the items B, which have been converted to numerical data by the preprocessing, to the input layer and giving the estimated unit prices to the output layer, the presumption model generation unit MG performs a learning process to generate a presumption model.

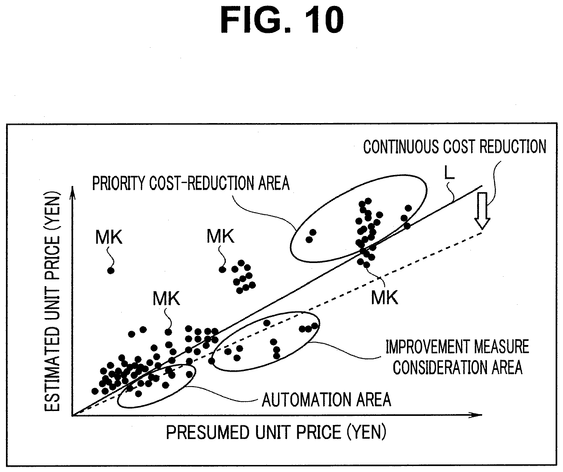

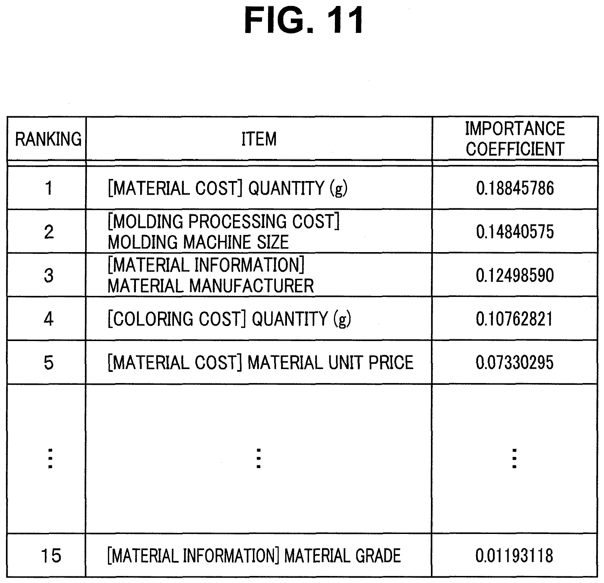

The procurement analysis unit PA generates an analysis report illustrated in Fig. 10 based on the estimate record information ERI. Further, when the presumption model generation unit MG generates a presumption model, the procurement analysis unit PA acquires items with importance degrees and importance coefficients illustrated in Fig. 11 described later. The procurement analysis unit PA can search for similar products based on similarity degrees of items with high importance coefficients and similarity degrees of the importance coefficients.

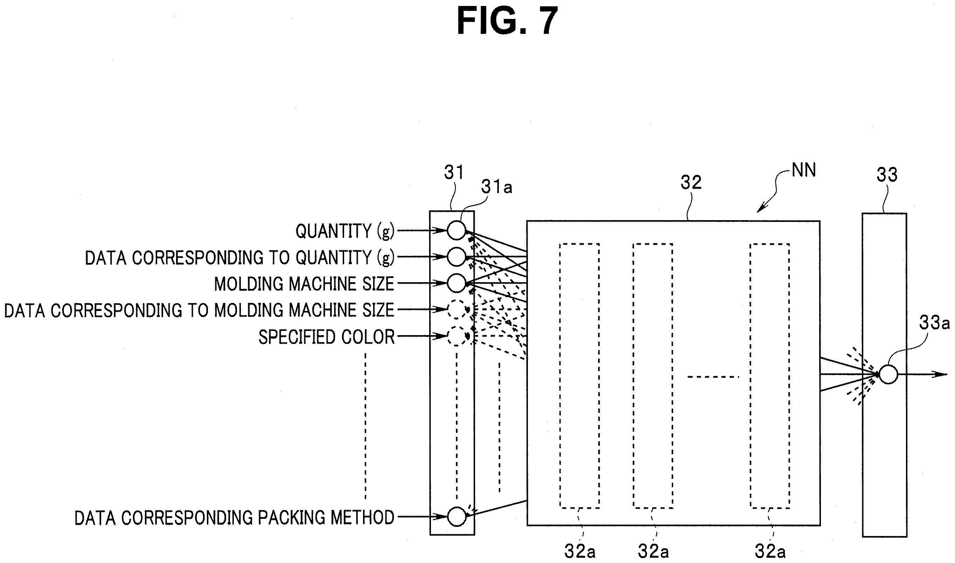

Fig. 7 is a diagram illustrating a configuration example of the neural network. The presumption models constituting the presumption model group M are generated using the neural network NN illustrated in Fig. 7.

The neural network NN includes an input layer 31, a hidden layer 32, and an output layer 33. In Fig. 7, the input layer 31 has the same number of input units 31a indicated by circles as the number of elements of the item names of the items A directly related to the estimated unit prices and the data corresponding to the item names, and the item names of the items B not directly related to the estimated unit prices and the data corresponding to the item names, among the estimate breakdown items.

To the input layer 31, the item names of the items A directly related to the estimated unit prices and the data corresponding to the item names, and the item names of the items B not directly related to the estimated unit prices and the data corresponding to the item names, among the estimate breakdown items, are inputted.

The hidden layer 32 has a multi-layer structure that includes a plurality of hidden layers 32a.

The output layer 33 has one output unit 33a. Estimated unit prices are given to the one output unit 33a, and a presumption model is generated, estimated unit price being an estimate breakdown item. A presumption model is generated for each product/part, and a plurality of generated presumption models are stored into the storage device 12 as a presumption model group.

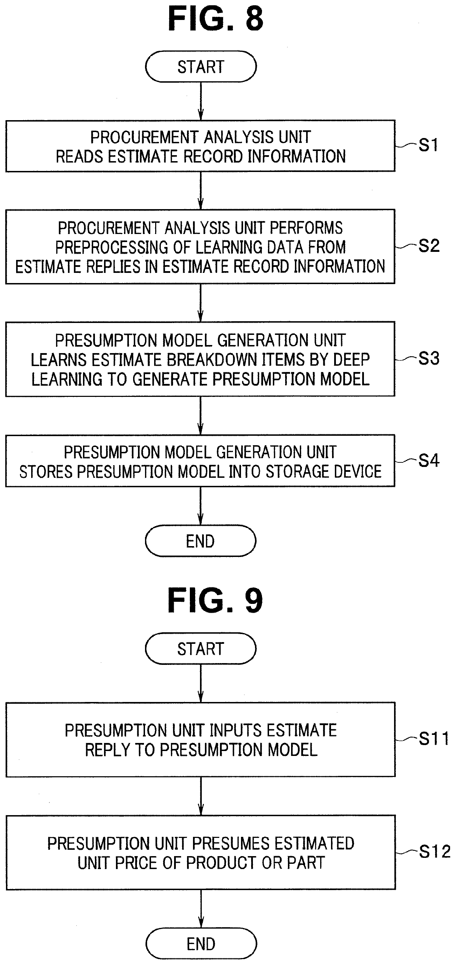

Fig. 8 is a flowchart illustrating an example of a flow of the presumption model generation process.

The procurement analysis unit PA reads the estimate record information ERI (S 1). The procurement analysis unit PA performs preprocessing of learning data from estimate replies E in the estimate record information ERI (S2). In the preprocessing, a process for digitizing the item names of the items A, the item names of the items B, and the input data corresponding to the item names of the items B, which are non-numerical data, is performed as described above.

Next, the presumption model generation unit MG performs learning of estimate breakdown items by deep learning and generates a presumption model (S3). The estimate breakdown items are the item names of the items A directly related to calculation of the estimated unit prices and input data (numerical data) corresponding to the item names, the item names of the items B not directly related to calculation of the estimated unit prices and input data (non-numerical data) corresponding to the item names, and estimated unit prices written in the estimate replies E. The presumption model generation unit MG stores the presumption model into the storage device 12 (S4), and the process ends.

Fig. 9 is a flowchart illustrating an example of a flow of an estimated unit price presumption process.

The presumption unit EP inputs an estimate reply E to a presumption model (S11). More specifically, the presumption unit EP inputs, among the estimate breakdown items of the estimate reply E, the item names of the items A directly related to calculation of an estimated unit price and input data (numerical data) corresponding to the item names, and the item names of the items B not directly related to calculation of the estimated unit price and input data (non-numerical data) corresponding to the item names, to the presumption model. As described above, since the item names of the items A, the item names of the items B, and the input data corresponding to the item names of the items B are non-numerical data, preprocessing is performed to digitize the item names and the input data. Note that the preprocessing is performed by the procurement analysis unit PA. The presumption unit EP presumes the estimated unit price of the product or part (S12), and the process ends. By inputting the item names of the items A directly related to calculation of the estimated unit price and the input data (numerical data) corresponding to the item names, and the item names of the items B not directly related to calculation of the estimated unit price and the input data (non-numerical data) corresponding to the item names to the presumption model, the estimated unit price (a presumed unit price) presumed by the presumption model is outputted from the presumption unit EP. The presumed unit price presumed in this way is used for generation of an analysis report by the procurement analysis unit PA.

As described above, the presumption model generation unit MG generates a presumption model using the item names of the items A directly related to calculation of estimated unit prices and input data (numerical data) corresponding to the item names, and the item names of the items B not directly related to calculation of the estimated unit prices and input data (non-numerical data) corresponding to the item names.

Then, when a new estimate reply E is inputted, the presumption unit EP presumes an estimated unit price using a presumption model generated in this way. As a result, the presumption unit EP can presume an estimated unit price considering such items that a buyer other than an experienced buyer overlooks (the item names of the items B not directly related to calculation of the estimated unit price and input data corresponding to the item names), and a buyer can easily grasp an abnormal estimate.

Fig. 10 is a diagram illustrating an example of an analysis report showing relationships between estimated unit prices and presumed unit prices.

In Fig. 10, the horizontal axis indicates presumed unit prices presumed by presumption models, and the vertical axis indicates estimated unit prices estimated in estimate replies E. The procurement analysis unit PA can generate an analysis report based on the estimated unit prices and the presumed unit prices presumed by the presumption unit EP using presumption models. More specifically, as illustrated in Fig. 10, relationships between estimated unit prices of estimate replies E and presumed unit prices obtained by presumption models are indicated by markers MK.

A straight line L is a line that connects points where an estimated unit price and a presumed unit price are the same. Each marker MK on the upper side of the straight line L indicates that a presumed unit price is higher than an estimated unit price, and each marker MK on the lower side of the straight line L indicates that a presumed unit price is lower than an estimated unit price. In other words, it is shown that, the longer the distance from the straight line L to a marker MK, the larger the difference between an estimated unit price and a presumed unit price is. By selecting a marker MK at a large distance from the straight line L with an input device and the like, a buyer can display an abnormal estimate reply E with a large difference between a presumed unit price and an estimated unit price, on the display device 3a.

A priority cost-reduction area in the analysis report is an area of products/parts with high unit prices and an area where presumed unit prices are higher than estimated unit prices. Therefore, by preferentially lowering the unit prices of the products/parts in the priority cost-reduction area, significant cost reduction can be realized.

An improvement measure consideration area is an area where, since estimated unit prices are lower than presumed unit prices, it can be presumed that a supplier has know-how for cost reduction. By applying such know-how to the products/parts in the priority cost-reduction area, continuous cost reduction can be realized.

Furthermore, an automation area is an area where, since unit prices of products/parts are low, and estimated unit prices are lower than presumed unit prices, the products/parts are automatically adopted without manual checking of estimate replies E.

Fig. 11 is a diagram illustrating an example of importance degrees of the estimate breakdown items.

When the presumption model generation unit MG generates a presumption model, importance degrees (importance coefficients) indicating which items (variables) give how much influence on the presumption of estimated prices are calculated. As illustrated in Fig. 11, the procurement analysis unit PA displays, for example, fifteen items, for which importance degrees (importance coefficients) calculated by the presumption model generation unit MG are high, on the display device 3a. As a result, the top fifteen important items (variables) which contribute to calculation of a presumed unit price are displayed on the display device 3a.

A buyer can grasp items (variables) with high importance degrees which contribute to a unit price of a product/part, and it helps the buyer determine which items are to be focused on at the time of assessing an estimate reply E. Further, by grasping the items (variables) with high importance degrees which contribute to the unit price of the product/part, the buyer can obtain information useful for price negotiation, and continuous cost reduction can be realized.

The procurement analysis unit PA can search for similar products from the estimate record information ERI about estimates performed in the past, using the importance degrees (importance coefficients) calculated by the presumption model generation unit MG.

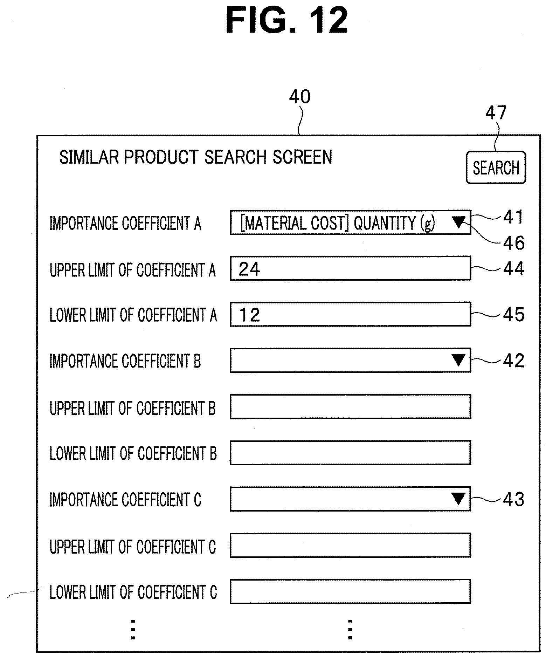

Fig. 12 is a diagram illustrating an example of a similar product search screen at the time of searching for similar products using the importance degrees.

A similar product search screen 40 includes input fields 41, 42, and 43 where importance coefficients A, B, and C are inputted (selected). The importance coefficients A, B, and C are in descending order of importance degree. Further, the similar product search screen 40 includes an input field 44 where an upper limit of the importance coefficient A is inputted and an input field 45 where a lower limit of the importance coefficient A is inputted. The input field 41 in which the importance coefficient A is inputted (selected) is provided with a selection button 46 for selecting an importance coefficient. Similar configurations are also made for the importance coefficients B and C.

When a user presses down the selection button 46 with the input device and the like, a list of importance coefficients is displayed. The user can select a desired importance coefficient from the displayed list of importance coefficients. Further, the user can input an upper limit and a lower limit of the selected importance coefficient A in the input field 44 and the input field 45, respectively. In the example of Fig. 12, [material cost] quantity (g) is selected as the importance coefficient A, and 24 and 12 are inputted as the upper limit and the lower limit, respectively.

The similar product search screen 40 includes a search button 47. By selecting importance coefficients A, B, and C, inputting an upper limit and a lower limit for each coefficient, and pressing down the search button 47, the user can search for similar products from the estimate record information ERI about estimates performed in the past.

Importance coefficients to be selected are not limited to the three importance coefficients A, B, and C, and one, two, or four or more importance coefficients may be selected. It is not necessary for both of an upper limit and a lower limit to be inputted for each selected importance coefficient, and either the upper limit or the lower limit may be inputted. Further, if a selected importance coefficient is an item B with non-numerical data, it is not necessary to input an upper limit and a lower limit.

By arbitrarily setting order of importance degrees (coefficients) and a range of each coefficient with an upper limit and a lower limit, using the similar product search screen 40, the user can search for similar products from the estimate record information ERI about estimates performed in the past while adjusting search conditions.

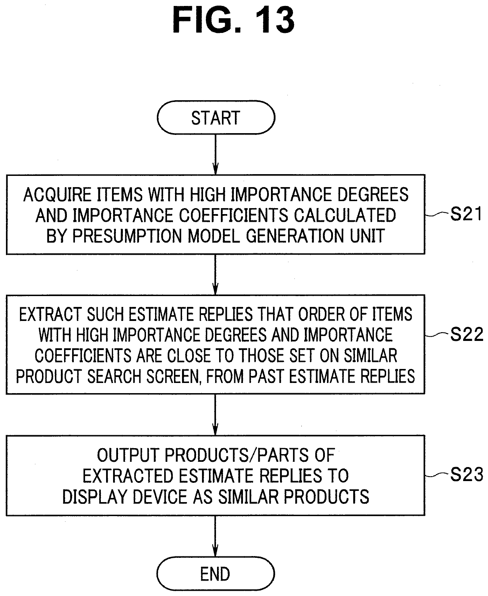

Fig. 13 is a flowchart illustrating an example of a flow of the similar product search process using the importance degrees.

The procurement analysis unit PA acquires items with high importance degrees and importance coefficients calculated by the presumption model generation unit MG (S21). From estimate replies E in the past stored as the estimate record information ERI, the procurement analysis unit PA extracts such estimate replies E that order of items with high importance degrees and importance coefficients are close to those set on the similar product search screen 40 (S22). The procurement analysis unit PA outputs products/parts of the extracted estimate replies E to the display device 3a as similar products (S23), and the process ends.

By the above process, it is possible for a buyer to, when receiving an estimate reply E of a certain product/part from a certain supplier, compare estimated unit prices among a plurality of suppliers by searching for similar products in the past and requesting other suppliers providing the similar products to estimate the certain product/part. Further, the buyer can easily compare an estimated unit price of the estimate reply E and estimated unit prices of similar products in the past and grasp an abnormal estimate.

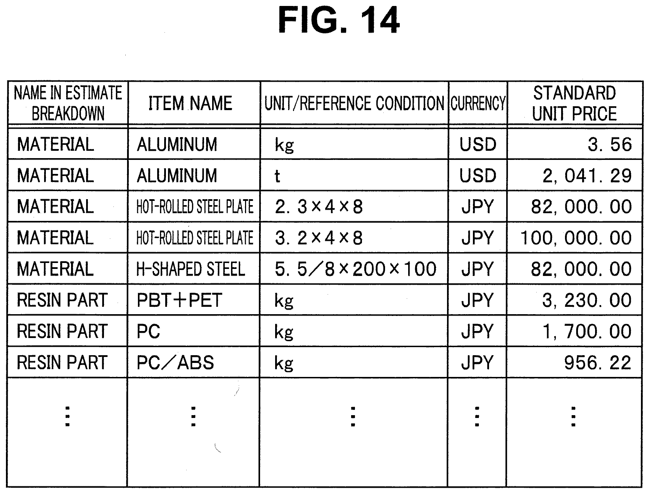

Fig. 14 is a diagram illustrating an example of a standard unit price table. When learning estimate breakdown items by the neural network NN to generate a presumption model, the presumption model generation unit MG selects items to be bases for presuming an estimated unit price and calculates a standard unit price for each of the selected items. As illustrated in Fig. 13, each calculated standard unit price is associated with an estimate breakdown name, an item name, a unit/reference condition, and currency, and the standard unit prices are stored into the storage device 12 as a standard unit price table.

Since it is possible to, by referring to the standard unit price table, obtain standard unit prices for the items B not directly related to an estimated unit price, a buyer can grasp whether an estimated unit price in an estimate reply E is abnormal or not.

As for the steps in each flowchart in the specification, the steps may be executed in changed execution order; a plurality of steps may be executed at the same time; or the steps may be executed in different order each time the steps are executed, unless this is contrary to their nature.

Some embodiments of the invention have been described, but the embodiments are presented as examples and are not intended to limit the scope of the invention. Such novel embodiments may be implemented in various other forms, and thus, various omissions, replacements, and changes are possible without departing from the gist of the invention. Such embodiments and modifications to the embodiments are included in the scope and the gist of the invention, and are also included in the scope of the claimed invention and equivalents of the claimed invention.

The present application is based upon and claims the benefit of priority to Japanese Patent Application No. 2021-99649, filed June 15, 2021, the entire contents of which are incorporated in the specification, claims, and drawings of the present application by reference.

## Claims

1. An estimate presumption apparatus comprising:
a presumption model generation unit configured to generate a presumption model using a neural network, with data directly related to calculation of estimated unit prices of estimate replies, data not directly related to the calculation of the estimated unit prices of the estimate replies, and the estimated unit prices of the estimate replies as learning data; and
a presumption unit configured to presume a unit price of a product/part using the presumption model generated by the presumption model generation unit.

2. The estimate presumption apparatus according to claim 1, wherein
the data directly related to the calculation of the estimated unit prices of the estimate replies includes item names of items directly related to the calculation of the estimated unit prices and input data corresponding to the item names of the items directly related to the calculation of the estimated unit prices; and
the data not directly related to the calculation of the estimated unit prices of the estimate replies includes item names of items not directly related to the calculation of the estimated unit prices and input data corresponding to the item names of the items not directly related to the calculation of the estimated unit prices.

3. The estimate presumption apparatus according to claim 2, comprising an analysis unit configured to perform preprocessing for digitizing the item names of the items directly related to the calculation of the estimated unit prices, the item names of the items not directly related to the calculation of the estimated unit prices, and the input data corresponding to the item names of the items not directly related to the calculation of the estimated unit prices.

4. The estimate presumption apparatus according to claim 3, wherein the analysis unit generates an analysis report showing relationships between unit prices presumed by the presumption unit and the estimated unit prices of the estimate replies and displays the analysis report on a display device.

5. The estimate presumption apparatus according to claim 3, wherein the analysis unit calculates importance coefficients indicating how much influence is given in presuming the unit price when the presumption model generation unit generates the presumption model.

6. The estimate presumption apparatus according to claim 5, wherein the analysis unit searches for a similar product that is similar to the product/part, based on similarity degrees of items, the importance coefficients of which are high, and/or similarity degrees of the importance coefficients.

7. The estimate presumption apparatus according to claim 1, wherein, when generating the presumption model, the presumption model generation unit selects items that are bases for presuming the unit price and calculates a standard unit price for each of the selected items.

8. The estimate presumption apparatus according to claim 1, wherein the presumption model generation unit generates the presumption model for each product/part and stores a plurality of presumption models generated into a storage device as a presumption model group.

9. An estimate presumption method comprising:
generating a presumption model using a neural network, with data directly related to calculation of estimated unit prices of estimate replies, data not directly related to the calculation of the estimated unit prices of the estimate replies, and the estimated unit prices of the estimate replies as learning data; and
presuming a unit price of a product/part using the generated presumption model.

10. An estimate presumption program for causing a computer to execute the steps of:
generating a presumption model using a neural network, with data directly related to calculation of estimated unit prices of estimate replies, data not directly related to the calculation of the estimated unit prices of the estimate replies, and the estimated unit prices of the estimate replies as learning data; and
presuming a unit price of a product/part using the generated presumption model.
